# EUROPEAN PATENT SPECIFICATION

(11) **EP 2 693 323 B1**
(45) Date of publication and mention of the grant of the patent: **25.11.2020**
(21) Application number: 13178107.2
(22) Date of filing: 26.07.2013
(51) Int. Cl.: G06F 3/0488, G06F 3/041

(54) **METHOD AND APPARATUS FOR VIRTUAL TOUR CREATION IN MOBILE DEVICE**
VERFAHREN UND VORRICHTUNG ZUR ERSTELLUNG VIRTUELLER RUNDGÄNGE IN EINER MOBILEN VORRICHTUNG
PROCÉDÉ ET APPAREIL DE CRÉATION DE VISITE VIRTUELLE DANS UN DISPOSITIF MOBILE

(30) Priority: 30.07.2012 KR 20120083111
(43) Date of publication of application: 05.02.2014
(73) Proprietor: Samsung Electronics Co., Ltd., Gyeonggi-do 443-742 (KR)
(72) Inventor: Yoo, Seung-Ji, 443-742 Gyeonggi-do (KR); Kim, Hyung-Mock, 443-742 Gyeonggi-do (KR)
(74) Representative: Nederlandsch Octrooibureau

(56) References cited:
- EP-A1- 2 323 019
- US-A1- 2009 055 736
- US-A1- 2011 134 302
- US-A1- 2011 251 954
- US-A1- 2012 169 638
- US-A1- 2012 179 970

## Description

### BACKGROUND OF THE INVENTION

### Field of the Invention

The present disclosure relates to an apparatus and a method for controlling data transmission in a terminal, and more particularly to an apparatus and a method for controlling data transmission in a terminal, which can conveniently perform transmission by using a stylus in the terminal.

### Description of the Related Art

In a terminal that includes a touch screen unit, a touch action can be performed by using a user's finger touch or by using a tool called a stylus employing a scheme other than the user's finger touch.

While the stylus performs a function like that of the user's finger touch, it can also perform finer, more precise functions, such as drawing a picture.

The terminal includes a touch screen unit constructed from a Touch Screen Panel (TSP) including multiple sensor panels. The multiple sensor panels include a capacitive/electrostatic sensor panel capable of recognizing the user's finger touch and an electromagnetic sensor panel capable of recognizing a touch of the stylus.

However, currently, a capacitive/electrostatic panel has a size satisfying the overall size of the touch screen unit, whereas an electromagnetic sensor panel has a size satisfying the size of a screen area displaying data in the touch screen unit.

Accordingly, a menu key and a back key, which are disposed in an area other than the screen area displaying data in the touch screen unit (for example, at a left side and at a right side of a lower end of the touch screen unit respectively), can recognize only the user's finger touch, but cannot recognize a touch of the stylus.

Generally, in order to transmit particular data in a particular mode, a transmission menu is displayed by touching the menu key, and particular data is transmitted by selecting the transmission menu.

However, in order to perform transmission while a relevant function is performed by using the stylus in the particular mode, a user transmits particular data through the user's finger touch of the menu key instead of the stylus.

Also, there is an inconvenience in that a search may need to be performed for the transmission menu in order to transmit the particular data in the particular mode and also, the particular data can be transmitted only through a predetermined number of times of touch action.

US 2011/251954 A1 discloses a method of accessing an online financial account through an applied gesture on a mobile device. The method of a mobile device includes determining that an applied gesture on a touchscreen of a mobile device is associated with a user-defined gesture. The method may include comparing the applied gesture above the touchscreen of the mobile device with a designated security gesture and then permitting an access of an online financial account through the mobile device when the applied gesture above the touchscreen of the mobile device matches the designated security gesture.

### SUMMARY OF THE INVENTION

To address the above-discussed deficiencies of the prior art, it is a primary object to provide an apparatus and a method for controlling data transmission in a terminal, which can conveniently perform transmission by using a stylus in the terminal.

In accordance with an aspect of the present disclosure, an apparatus for controlling data transmission in a terminal is provided. The apparatus includes a touch screen unit configured to generate a transmission gesture with a stylus. The apparatus also includes a controller configured to perform a control operation to transmit relevant data when the transmission gesture with the stylus is generated on the touch screen unit. In accordance with an aspect of the present disclosure, a method for controlling data transmission in a terminal is provided. The method includes determining whether a transmission gesture with a stylus is generated on a touch screen unit of the terminal, and transmitting relevant data when a transmission gesture with the stylus is generated.

The invention will be carried out according to the attached independent claims.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates the configuration of a terminal according to an embodiment of the present disclosure;
FIG. 2 illustrates a process for transmitting data in a memo mode of a terminal according to a first embodiment of the present disclosure;
FIG. 3 illustrates a process for transmitting data in a message mode of a terminal according to a second embodiment of the present disclosure;
FIG. 4 illustrates a process for transmitting data in a music reproduction mode of a terminal according to a third embodiment of the present disclosure;
FIG. 5 illustrates a process for transmitting data in a telephone directory mode of a terminal according to a fourth embodiment of the present disclosure;
FIG. 6 illustrates a process for transmitting data in a camera mode of a terminal according to a fifth embodiment of the present disclosure;
FIG. 7 is a view for explaining data transmission in the memo mode as shown in FIG. 2; and
FIGS. 8A and 8B are views for explaining data transmission in the message mode as shown in FIG. 3.

### DETAILED DESCRIPTION OF THE EXEMPLARY EMBODIMENTS

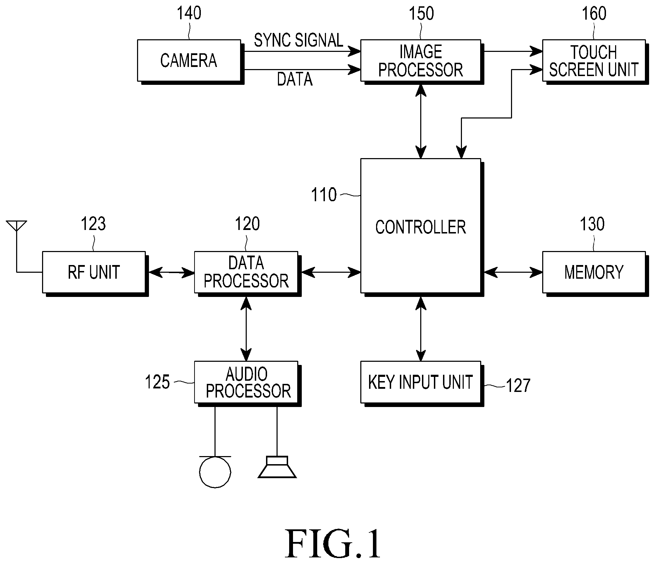

FIGURES 1 through 8B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. Hereinafter, exemplary embodiments of the present disclosure will be described in detail with reference to the accompanying drawings. It should be noted that, in the accompanying drawings, the same elements will be designated by the same reference numerals throughout the following description and drawings although they may be shown in different drawings.

Terminals according to an embodiment of the present disclosure include a portable terminal and a fixed terminal. In this situation, portable terminals, which are electronic devices portable so as to be easily carried, may include a video phone, a mobile phone, a smart phone, an IMT-2000 (International Mobile Telecommunication 2000) terminal, a WCDMA (Wideband Code Division Multiple Access) terminal, a UMTS (Universal Mobile Telecommunication Service) terminal, a PDA (Personal Digital Assistant), a PMP (Portable Multimedia Player), a DMB (Digital Multimedia Broadcasting) terminal, an e-book, portable computers (e.g. a laptop, a tablet PC, etc.), a digital camera, and the like. Also, the fixed terminal may be a desktop personal computer or the like.

FIG. 1 is a block diagram showing the configuration of a terminal according to an embodiment of the present disclosure.

Referring to FIG. 1, an RF unit 123 performs a wireless communication function of the terminal. The RF unit 123 includes an RF transmitter for up-converting the frequency of a signal to be transmitted and then amplifying the frequency-up-converted signal, an RF receiver for low-noise amplifying a received signal and then down-converting the frequency of the low-noise amplified signal, and so forth. A data processor 120 includes a transmitter for encoding and modulating a signal to be transmitted, a receiver for demodulating and decoding a signal received by the RF unit 123, and so forth. Namely, the data processor 120 may include a modem (modulator/demodulator) and a codec (coder/decoder). In this embodiment, the codec includes a data codec for processing packet data and the like, and an audio codec for processing audio signals including voice and the like. An audio processor 125 reproduces a received audio signal, which has been output from the audio codec of the data processor 120, or transmits an audio signal to be transmitted, which is generated from a microphone, to the audio codec of the data processor 120.

A key input unit 127 may include keys for inputting numbers and text information and function keys for setting various functions.

A memory 130 may include a program memory and a data memory. The program memory may store programs for controlling a general operation of the terminal and programs for controlling the transmission of relevant data through a transmission gesture of a stylus according to an embodiment of the present disclosure. Also, the data memory temporarily stores data generated while the programs are performed.

A controller 110 controls an overall operation of the terminal.

According to an embodiment of the present disclosure, when a transmission gesture with a stylus is generated on a touch screen unit 160, the controller 110 performs a control operation for transmitting relevant data.

Also, according to an embodiment of the present disclosure, when a transmission gesture with the stylus is generated on the touch screen unit 160, the controller 110 performs a control operation for storing relevant data and simultaneously, transmitting the relevant data.

Also, according to an embodiment of the present disclosure, when a transmission gesture with the stylus is generated on the touch screen unit 160, the controller 110 performs a control operation to display transmission types each capable of transmitting relevant data, and to transmit the relevant data in a transmission mode matched to a selected transmission type.

Also, according to an embodiment of the present disclosure, when a transmission gesture with the stylus is generated on the touch screen unit 160, the controller 110 performs a control operation for transmitting relevant data in a relevant transmission mode matched to a type of the generated transmission gesture.

Also, according to an embodiment of the present disclosure, when a transmission gesture with the stylus is generated on the touch screen unit 160, the controller 110 performs a control operation for transmitting relevant data in a preset transmission mode.

Also, according to an embodiment of the present disclosure, when a transmission gesture with the stylus is generated on the touch screen unit 160, the controller 110 performs a control operation for transmitting relevant data, for which the transmission gesture is generated among multiple data.

Also, according to an embodiment of the present disclosure, when a transmission gesture with the stylus is generated in an input mode of the terminal, the controller 110 performs a control operation for storing data entered in the input mode and simultaneously, transmitting the data.

Also, according to an embodiment of the present disclosure, when a transmission gesture with the stylus is generated in a music reproduction mode of the terminal, the controller 110 performs a control operation for transmitting music data which is being reproduced.

Also, according to an embodiment of the present disclosure, when a transmission gesture with the stylus is generated in a data display mode of the terminal, the controller 110 performs a control operation for transmitting relevant data, for which the transmission gesture is generated among multiple data.

Also, according to an embodiment of the present disclosure, when a transmission gesture with the stylus is generated in a preview mode of the terminal, the controller 110 performs a control operation for capturing image data, storing the captured image data in the form of still image data and simultaneously, transmitting the captured image data. Also, when a transmission gesture with the stylus is generated in a moving image capturing mode of a terminal, the controller 110 performs a control operation for storing captured image data in the form of moving image data and simultaneously, transmitting the moving image data.

A camera 140 includes a camera sensor for capturing image data and converting the captured light signal to an electrical signal, and a signal processor for converting the analog image signal, which has been captured by the camera sensor, to digital data. In this situation, it is assumed that the camera sensor is a CCD (Charge-Coupled Device) sensor or a CMOS (Complementary Metal-Oxide Semiconductor) sensor, and the signal processor may be implemented by using a DSP (Digital Signal Processor). Also, the camera sensor and the signal processor may be implemented as one unit, or may be implemented as separate elements.

An image processor 150 performs ISP (Image Signal Processing) for displaying an image signal, which has been output from the camera 140, on the touch screen unit 160.

In this situation, the term "ISP" refers to the execution of functions including a gamma correction, an interpolation, a spatial change, an image effect, an image scale, AWB (Auto White Balance), AE (Auto Exposure), AF (Auto Focus), and the like. Accordingly, the image processor 150 processes the image signal, which has been output from the camera 140, on a frame-by-frame basis, and outputs the frame image data in such a manner as to meet the characteristics and the size of the touch screen unit 160. Also, the image processor 150 includes an image codec, and compresses the frame image data displayed on the touch screen unit 160 in a set scheme, or restores the compressed frame image data to an original frame image data. In this situation, the image codec may be implemented by using a JPEG (Joint Photographic Coding Experts Group) codec, an MPEG-4 (Moving Picture Experts Group-4) codec, a Wavelet codec, or the like. It is assumed that the image processor 150 includes an OSD (On-Screen Display) function. The image processor 150 may output on-screen display data according to the size of a screen displayed under the control of the controller 110.

The touch screen unit 160 may operate as an input unit and a display unit. When the touch screen unit 160 operates as a display unit, it displays an image signal, which is output by the image processor 150, on a screen, and displays user data which is output by the controller 110. Also, when the touch screen unit 160 operates as an input unit, the touch screen unit 160 may display keys which are identical to those of the key input unit 127.

Also, the touch screen unit 160 includes a Touch Screen Panel (TSP) including multiple sensor panels. The multiple sensor panels may include a capacitive/electrostatic sensor panel capable of recognizing a user's finger touch and an electromagnetic sensor panel capable of sensing a delicate touch, such as a touch of a stylus.

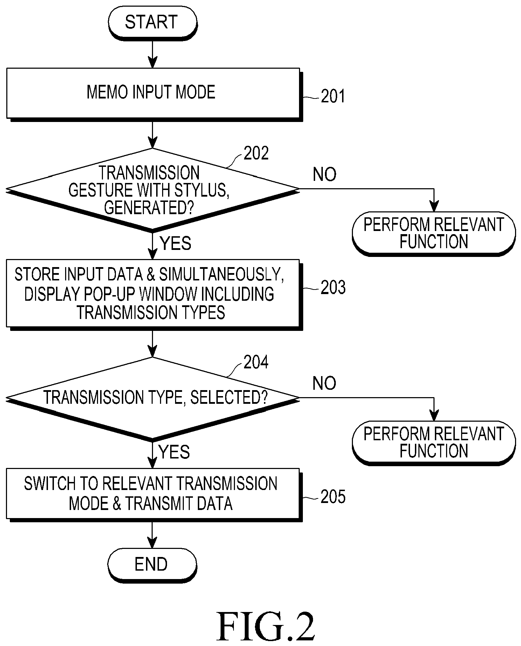

An operation of controlling data transmission in the terminal as described above will be described below in detail with reference to FIGS. 2 to 7.

First, an operation of controlling data transmission in an input mode of the terminal according to an embodiment of the present disclosure will be described in detail with reference to FIGS. 2 and 3 and FIGS. 7, 8A, and 8B. In embodiments of the present disclosure, a memo mode and a message mode are described as examples. However, an operation of controlling data transmission may be similarly performed in each of all input modes capable of receiving data as input.

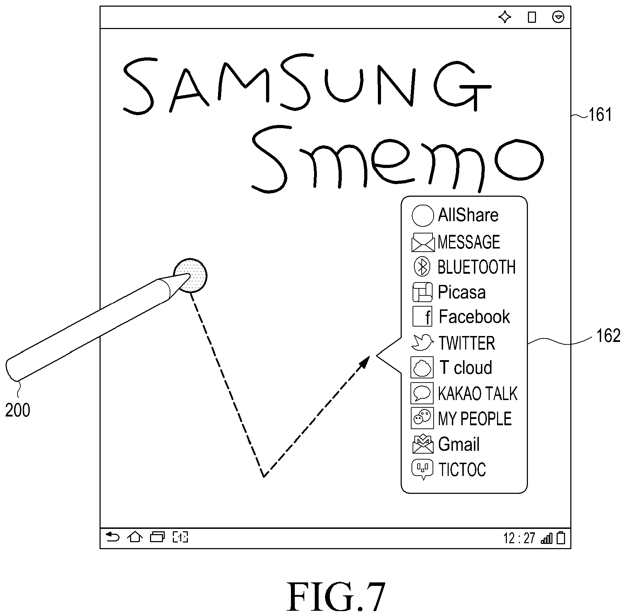

FIG. 2 is a flowchart showing a process for transmitting data in a memo mode of a terminal according to a first embodiment of the present disclosure. FIG. 7 is a view for explaining data transmission in a memo mode of a terminal.

Hereinafter, a first embodiment of the present disclosure will be described in detail together with reference to FIG. 1.

Referring to FIG. 2, when a memo application is selected and a memo input for inputting a new memo is selected, the controller 110 senses the selection of the memo application and the selection of the memo input, and causes the terminal to switch to a memo input mode. When a transmission gesture with the stylus is generated on the touch screen unit while character data is input in block 201 corresponding to the memo input mode, the controller 110 senses the generation of the transmission gesture in block 202, and, proceeding to block 203, stores the input character data in the memory 130 in the form of a file and simultaneously, displays transmission types each capable of transmitting the stored file in a pop-up window.

When a relevant transmission type is selected from among transmission types displayed in the pop-up window, the controller 110 senses the selection of the relevant transmission type in block 204, and, proceeding to block 205, causes the terminal to switch to a transmission mode matched to the selected relevant transmission type and transmit the file in the switched transmission mode.

Otherwise, when a transmission gesture with the stylus is generated on the touch screen unit while character data is input in block 201, the controller 110 senses the generation of the transmission gesture, stores the input character data in the memory 130 in the form of a file, and simultaneously, determines whether a transmission mode previously set by a user exists. Namely, the user may set the terminal so that it immediately switches to the transmission mode designated by the user when a transmission gesture with the stylus is generated. Accordingly, the transmission mode previously set by the user exists, and the controller 110 may perform a control operation for causing the terminal to switch to the preset transmission mode, and transmitting the file in the switched transmission mode.

Otherwise, when a transmission gesture with the stylus is generated on the touch screen unit while character data is input in block 201, the controller 110 senses the generation of the transmission gesture, stores the input character data in the memory 130 in the form of a file, and simultaneously, determines a type of the generated transmission gesture. The user may previously set various transmission gestures according to transmission types. Accordingly, the controller 110 may perform a control operation to determine a type of the generated transmission gesture, to cause the terminal to switch to a transmission mode matched to the type of the generated transmission gesture, and to transmit the file in the switched transmission mode.

FIG. 7 illustrates an operation of controlling data transmission in the memo input mode. As shown in FIG. 7, when characters "SAMSUNG" are first input by using a stylus 200 in the memo input mode and then a transmission gesture 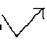 with the stylus 200 is generated on a screen 161 of the touch screen unit, the controller 110 stores the input character data in the memory 130 in the form of a file, and displays a pop-up window 162 including transmission types each capable of transmitting the file, at an end point of the transmission gesture. Accordingly, when the user selects a relevant transmission type from among transmission types displayed in the pop-up window, the controller 110 performs a control operation for causing the terminal to switch to a relevant transmission mode, and transmitting the file in the switched relevant transmission mode.

For example, when the user selects "message" from among transmission types displayed in the pop-up window, the controller 110 performs a control operation for causing the terminal to switch to a mode for transmitting a message, to which the file is attached, and selecting transmission in the message transmission mode. Otherwise, when a transmission gesture 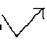 with the stylus 200 is again generated on a screen of the touch screen unit, the controller 110 performs a control operation for transmitting a message, to which the file is attached, to a relevant recipient who has been input.

In an embodiment of the present disclosure, when " 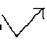 " is input by using the stylus and is used as a transmission gesture, an action of tearing a sheet having a perforated line at its upper part just as a sheet is torn from a spiral notebook, or an action of detaching and attaching a Post-it note is understood as a transmission action, and thus, an action represented by " 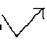 ," which is matched to the transmission action, is set as a transmission gesture. However, the transmission gesture which is input by using the stylus may be variously set according to the user's preference.

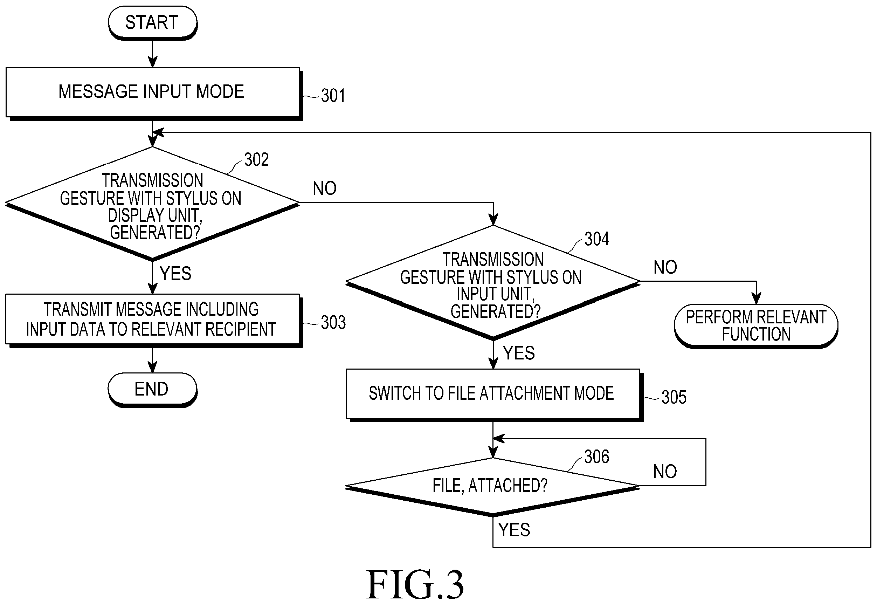

FIG. 3 is a flowchart showing a process for transmitting data in a message mode of a terminal according to a second embodiment of the present disclosure. FIG. 7 is a view for explaining data transmission in a message mode of a terminal data transmission. Hereinafter, a second embodiment of the present disclosure will be described in detail together with reference to FIG. 1.

Referring to FIG. 3, when a message application is selected and a message input for inputting a message is selected, the controller 110 senses the selection of the message application and the selection of the message input, and causes the terminal to switch to a message input mode. In block 301 corresponding to the message input mode, the controller 110 may display the screen of the touch screen unit in such a manner that the screen is divided into the input unit capable of inputting a character by using the stylus and the display unit for displaying a character which is input on the input unit. Accordingly, while a character which is input on the input unit is displayed on the display unit after the character is input by using the stylus on the input unit, when a transmission gesture with the stylus is generated on the display unit, the controller 110 senses the generation of the transmission gesture in block 302, and, proceeding to block 303, transmits a message including the character data, which is being displayed on the display unit, to a relevant recipient who has been input.

Otherwise, while a character which is input on the input unit is displayed on the display unit after the character is input by using the stylus on the input unit, when a transmission gesture with the stylus is generated on the input unit, the controller 110 senses the generation of the transmission gesture in block 304, and, proceeding to block 305, causes the terminal to switch to a file attachment mode. When a relevant file is attached in the file attachment mode, the controller 110 may sense the attachment of the relevant file in block 306, may cause the terminal to again switch to the message input mode in block 301, and may proceed to blocks 302 and 303.

In the second embodiment of the present disclosure, an example situation has been described where the transmission operation is performed when a transmission gesture with the stylus is generated on the display unit in the message input mode, and another example situation has been described where the operation of attaching a file is performed when a transmission gesture with the stylus is generated on the input unit in the message input mode. However, when a transmission gesture with the stylus is generated on any unit of the display unit and the input unit, a transmission operation may be performed.

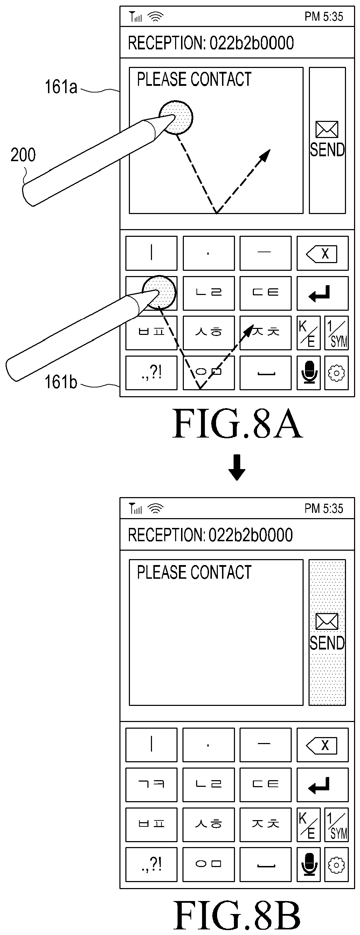

FIGS. 8A and 8B illustrate an operation of controlling data transmission in the message input mode. As shown in FIG. 8A, while a relevant character is displayed on a display unit 161a in response to a touch of a relevant key after the relevant key of a keypad displayed on an input unit 161b is touched by using the stylus 200 in a message input mode, when a transmission gesture 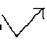 with the stylus 200 is generated on the display unit 161a, the controller 110 performs a control operation for transmitting a message including character data, which is being displayed on the display unit 161a, to a relevant recipient. FIG. 8B illustrates that transmission is selected according to the transmission gesture 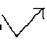 with the stylus 200 as generated in FIG. 8A.

Otherwise, when a transmission gesture 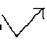 with the stylus 200 is generated on the input unit 161b in FIG. 8A, the terminal may switch to a file attachment mode.

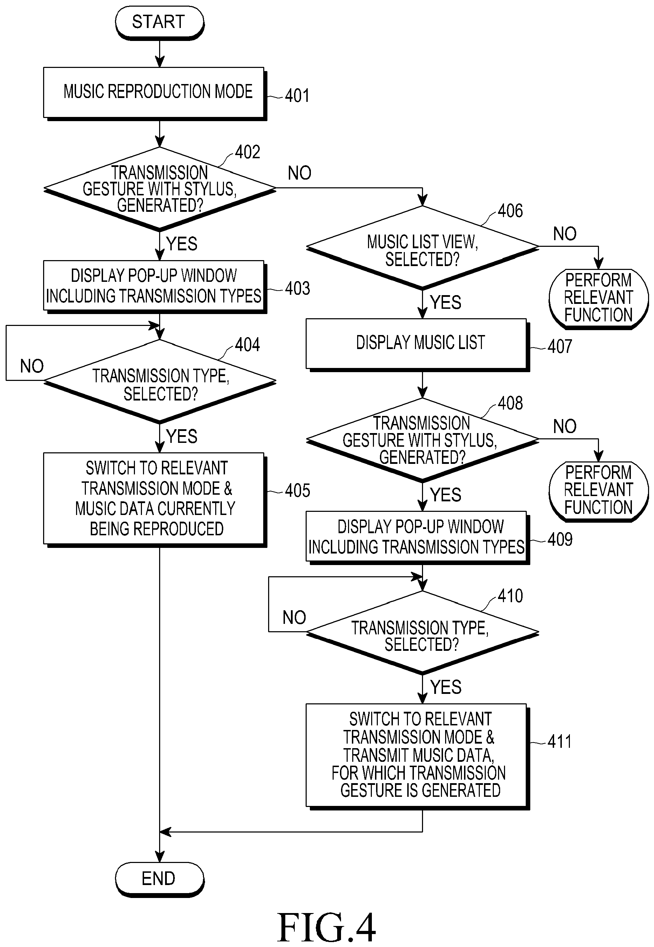

Next, an operation of controlling data transmission in a music input mode of the terminal according to an embodiment of the present disclosure will be described in detail with reference to FIG. 4. In an embodiment of the present disclosure, a music reproduction mode is described as an example. However, an operation of controlling data transmission may be similarly performed in each of all audio modes capable of reproducing audio data.

FIG. 4 is a flowchart showing a process for transmitting data in a music reproduction mode of a terminal according to a third embodiment of the present disclosure. Hereinafter, a third embodiment of the present disclosure will be described in detail together with reference to FIG. 1.

Referring to FIG. 4, when a music application is selected and music reproduction is selected, the controller 110 senses the selection of the music application and the selection of the music reproduction, and causes the terminal to switch to a music reproduction mode for reproducing and outputting music. When a transmission gesture with the stylus is generated on the touch screen unit 160 in block 401 corresponding to the music reproduction mode, the controller 110 senses the generation of the transmission gesture in block 402, and proceeds to block 403 to display transmission types each capable of transmitting music data, which is being reproduced, in a pop-up window.

When a relevant transmission type is selected from among transmission types displayed in the pop-up window, the controller 110 senses the selection of the relevant transmission type in block 404, and proceeds to block 405 to cause the terminal to switch to a transmission mode matched to the selected relevant transmission type and transmit the music data in the switched transmission mode.

Otherwise, when a music list view is selected while music is reproduced in the music reproduction mode, the controller 110 senses the selection of the music list view in block 406, and proceeds to block 407 to display a music list.

When a transmission gesture with the stylus is generated on the touch screen unit 160 while the music list is displayed, the controller 110 senses the generation of the transmission gesture in block 408, and proceeds to block 409 to display transmission types each capable of transmitting music data, for which the transmission gesture is generated on the music list, in a pop-up window.

When a relevant transmission type is selected from among transmission types displayed in the pop-up window, the controller 110 senses the selection of the relevant transmission type in block 410, and proceeds to block 411 to cause the terminal to switch to a transmission mode matched to the selected relevant transmission type and transmit the music data, for which the transmission gesture is generated, in the switched transmission mode.

Otherwise, when the generation of a transmission gesture with the stylus on the touch screen unit is sensed in block 402 or in block 408, the controller 110 determines whether there exists a transmission mode previously set by a user. Namely, the user may set the terminal so that it immediately switches to the transmission mode designated by the user when a transmission gesture with the stylus is generated. Accordingly, the transmission mode previously set by the user exists, and the controller 110 may perform a control operation for causing the terminal to switch to the preset transmission mode, and transmit the relevant music data in the switched transmission mode.

Otherwise, when the generation of a transmission gesture with the stylus on the touch screen unit is sensed in block 402 or in block 408, the controller 110 determines a type of the generated transmission gesture. The user may previously set various transmission gestures according to transmission types. Accordingly, the controller 110 may perform a control operation to determine a type of the generated transmission gesture, to cause the terminal to switch to a transmission mode matched to the type of the generated transmission gesture, and to transmit the relevant music data in the switched transmission mode.

Also, in the third embodiment of the present disclosure, the transmission gesture with the stylus may be represented by " 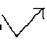 ."

Further, when a transmission gesture with the stylus 200 is generated while the user views a broadcast in a DMB mode as well as in the music reproduction mode as shown in FIG. 4, the controller may perform a control operation for capturing and storing image data, for which the transmission gesture is generated, and simultaneously, transmitting the stored image data.

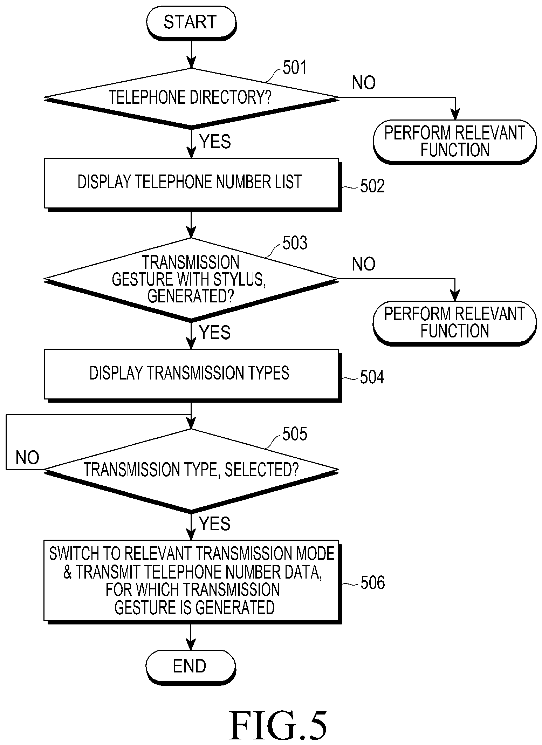

Next, an operation of controlling data transmission in a data display mode of the terminal according to an embodiment of the present disclosure will be described in detail with reference to FIG. 5. In an embodiment of the present disclosure, a telephone directory mode is described as an example. However, an operation of controlling data transmission may be similarly performed in each of all data display modes capable of displaying data.

FIG. 5 is a flowchart showing a process for transmitting data in a telephone directory mode of a terminal according to a fourth embodiment of the present disclosure.

Hereinafter, a fourth embodiment of the present disclosure will be described in detail together with reference to FIG. 1.

Referring to FIG. 5, when a telephone directory application is selected, the controller 110 senses the selection of the telephone directory application in block 501, and proceeds to block 502 to display a telephone number list including multiple telephone number data stored in a telephone directory.

When a transmission gesture with the stylus is generated on the touch screen unit 160 displaying the telephone number list, the controller 110 senses the generation of the transmission gesture in block 503, and proceeds to block 504 to display transmission types each capable of transmitting relevant telephone number data, for which the transmission gesture is generated, in a pop-up window.

When a relevant transmission type is selected from among transmission types displayed in the pop-up window, the controller 110 senses the selection of the relevant transmission type in block 504, and proceeds to block 506 to cause the terminal to switch to a transmission mode matched to the selected relevant transmission type and transmit the relevant telephone number data, for which the transmission gesture is generated, in the switched transmission mode.

The relevant telephone number data, for which the transmission gesture is generated, corresponds to telephone number data at a point that the stylus touches on the telephone number list in order to generate the transmission gesture.

Otherwise, when the generation of a transmission gesture with the stylus on the touch screen unit 160 is sensed while the telephone directory list is displayed in block 502, the controller 110 determines whether there exists a transmission mode previously set by a user. Namely, the user may set the terminal so that it immediately switches to the transmission mode designated by the user when a transmission gesture with the stylus is generated. Accordingly, the transmission mode previously set by the user exists, and the controller 110 may perform a control operation for causing the terminal to switch to the preset transmission mode, and transmit the relevant telephone number data, for which the transmission gesture is generated, in the switched transmission mode.

Otherwise, when the generation of a transmission gesture with the stylus on the touch screen unit 160 is sensed while the telephone directory list is displayed in block 502, the controller 110 determines a type of the generated transmission gesture. The user may previously set various transmission gestures according to transmission types.

Accordingly, the controller 110 may perform a control operation to determine a type of the generated transmission gesture, to cause the terminal to switch to a transmission mode matched to the type of the generated transmission gesture, and to transmit the relevant telephone number data, for which the transmission gesture is generated, in the switched transmission mode.

Also, in the fourth embodiment of the present disclosure, the transmission gesture with the stylus may be represented by " 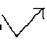 ."

In the fourth embodiment of the present disclosure, the transmission of telephone number data which is selected from the telephone number list by a transmission gesture with the stylus is described as an example. However, when a transmission gesture with the stylus is generated while detailed information on selected telephone number data is displayed after the relevant telephone number data is selected from the telephone number list, the selected telephone number data may be transmitted.

Also, as in the embodiment of the telephone directory as shown in FIG. 5, when a transmission gesture with the stylus is generated while multiple image data captured and downloaded through a gallery view are displayed, the controller may perform a control operation for transmitting image data, for which the transmission gesture is generated.

Otherwise, when a transmission gesture with the stylus is generated on the touch screen unit 160 while one image data selected from among the multiple image data displayed through the gallery view is displayed, the controller 110 may perform a control operation for transmitting the one selected image data.

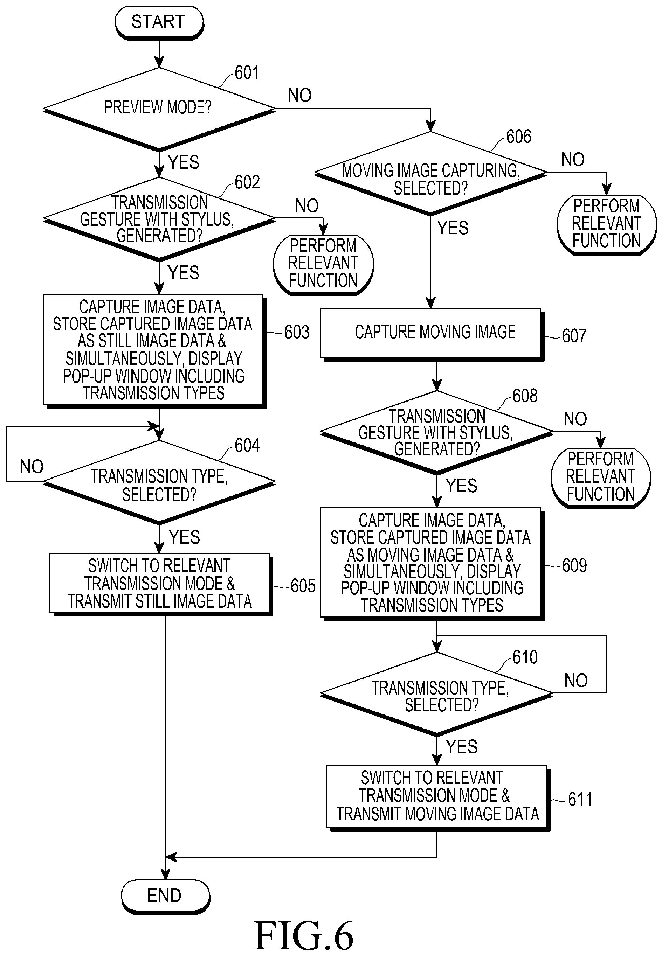

Next, an operation of controlling data transmission in a camera mode of the terminal according to an embodiment of the present disclosure will be described in detail with reference to FIG. 6. In an embodiment of the present disclosure, a camera mode is described as an example. However, an operation of controlling data transmission may be similarly performed in each of all modes capable of capturing data.

FIG. 6 is a flowchart showing a process for transmitting data in a camera mode of a terminal according to a fifth embodiment of the present disclosure.

Hereinafter, a fifth embodiment of the present disclosure will be described in detail together with reference to FIG. 1.

Referring to FIG. 6, when a camera application is selected and the terminal switches to a preview mode, the controller 110 senses switching to the preview mode in block 601, and displays image data received through the camera 140 in the preview mode.

When a transmission gesture with the stylus is generated on the touch screen unit 160 in a preview mode for displaying the received image data, the controller 110 senses the generation of the transmission gesture in block 602, and proceeds to block 603 to capture image data received at a time point when the stylus touches the touch screen unit 160 in order to generate the transmission gesture, store the captured image data in the memory 130 in the form of still image data, and simultaneously, display transmission types each capable of transmitting the stored still image data in a pop-up window.

When a relevant transmission type is selected from among transmission types displayed in the pop-up window, the controller 110 senses the selection of the relevant transmission type in block 604, and proceeds to block 605 to cause the terminal to switch to a transmission mode matched to the selected relevant transmission type and transmit the still image data in the switched transmission mode.

Otherwise, when moving image capturing is selected in the preview mode, the controller 110 senses the selection of the moving image capturing in block 606, and proceeds to block 607 to capture a moving image.

When a transmission gesture with the stylus is generated on the touch screen unit 160 while the moving image is captured, the controller 110 senses the generation of the transmission gesture in block 608, and proceeds to block 609 to store the captured image data in the memory 130 in the form of moving image data and simultaneously, display transmission types each capable of transmitting the stored moving image data in a pop-up window.

When a relevant transmission type is selected from among transmission types displayed in the pop-up window, the controller 110 senses the selection of the relevant transmission type in block 610, and proceeds to block 611 to cause the terminal to switch to a transmission mode matched to the selected relevant transmission type and transmit the moving image data in the switched transmission mode.

Also, when the generation of a transmission gesture with the stylus on the touch screen unit is sensed in block 602 or in block 608, the controller 110 determines whether there exists a transmission mode previously set by a user. Namely, the user may set the terminal so that it immediately switches to the transmission mode designated by the user when a transmission gesture with the stylus is generated. Accordingly, the transmission mode previously set by the user exists, and the controller 110 may perform a control operation for causing the terminal to switch to the preset transmission mode, and transmit still image data or moving image data in the switched transmission mode.

Also, when the generation of a transmission gesture with the stylus on the touch screen unit is sensed in block 602 or in block 608, the controller 110 determines a type of the generated transmission gesture. The user may previously set various transmission gestures according to transmission types. Accordingly, the controller 110 may perform a control operation to determine a type of the generated transmission gesture, to cause the terminal to switch to a transmission mode matched to the type of the generated transmission gesture, and to transmit the still image data or the moving image data in the switched transmission mode.

Also, in the fifth embodiment of the present disclosure, the transmission gesture with the stylus may be represented by " 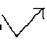 ."

The apparatus and the method for controlling data transmission in the terminal according to the present disclosure may be implemented by using a computer-readable code in a computer-readable recording medium. The computer-readable recording mediums include all types of recording devices which may be read by a computer system and on which data are stored. Examples of the recording mediums include a ROM (Read Only Memory), a RAM (Random Access Memory), an optical disc, a magnetic tape, a floppy disk, a hard disc, a non-volatile memory, and the like, and may also include things implemented in the form of carrier wave (e.g. transmission through the Internet). Also, the computer-readable recording mediums are distributed in a computer system connected to a network, so that computer-readable codes may be stored in the distributed storage mediums and be executed in a distributed scheme.

By providing an apparatus and a method for controlling data transmission in a terminal, the present disclosure has an effect in that data can be conveniently transmitted by using a stylus.

## Claims

1. An apparatus for controlling data transmission in a terminal, the apparatus comprising:
a touch screen unit to generate a transmission gesture with a stylus; and
a controller configured to:
perform a control operation to transmit relevant data when the transmission gesture with the stylus is generated on the touch screen unit,
wherein, a transmission type for transmission of the relevant data among a plurality of transmission types is matched to a transmission gesture type among a plurality of transmission gesture types,
wherein the controller is further configured to:
in response to switching of a message input mode, divide the touch screen unit into an input unit and a display unit,
display character data inputted from the input unit on the display unit,
in response to generation of transmission gesture on the display unit while the character data is displayed on the display unit, transmit a message including the character data displayed on the display unit, and
in response to generation of transmission gesture on the input unit while the character data is displayed on the display unit, switch to file attachment mode.

2. The apparatus as claimed in claim 1, wherein the controller is configured to perform a control operation to store and simultaneously, transmit the relevant data, when the transmission gesture with the stylus is generated on the touch screen unit.

3. The apparatus as claimed in claim 1, wherein, when the transmission gesture with the stylus is generated on the touch screen unit, the controller is configured to perform a control operation to display transmission types each capable of transmitting the relevant data, and to transmit the relevant data in a transmission mode matched to a selected transmission type.

4. The apparatus as claimed in claim 1, wherein, when the transmission gesture with the stylus is generated on the touch screen unit, the controller is configured to perform a control operation to transmit the relevant data in a relevant transmission mode matched to a type of the generated transmission gesture.

5. The apparatus as claimed in claim 1, wherein, when the transmission gesture with the stylus is generated on the touch screen unit, the controller is configured to perform a control operation to transmit the relevant data in a preset transmission mode.

6. The apparatus as claimed in claim 1, wherein, when the transmission gesture with the stylus is generated on the touch screen unit, the controller is configured to perform a control operation to transmit the relevant data, for which the transmission gesture is generated among multiple data.

7. The apparatus as claimed in claim 1,
wherein, when the transmission gesture with the stylus is generated in an input mode of the terminal, the controller is configured to perform a control operation to store and simultaneously transmit data entered in an input mode,
wherein, when the transmission gesture with the stylus is generated in a music reproduction mode of the terminal, the controller is configured to perform a control operation to transmit music data which is being reproduced, and
wherein, when the transmission gesture with the stylus is generated in a data display mode of the terminal, the controller is configured to perform a control operation to transmit the relevant data, for which the transmission gesture is generated among multiple data.

8. The apparatus as claimed in claim 1, wherein the controller is configured to perform a control operation to capture image data, store the captured image data in a form of still image data and simultaneously, transmit the captured image data when the transmission gesture with the stylus is generated in a preview mode of the terminal, and perform a control operation to store captured image data in a form of moving image data and simultaneously, transmit the moving image data when the transmission gesture with the stylus is generated in a moving image capturing mode of the terminal.

9. A method for controlling data transmission in a terminal, the method comprising:
determining whether a transmission gesture with a stylus is generated on a touch screen unit of the terminal; and
transmitting relevant data when a transmission gesture with the stylus is generated,
wherein, a transmission type for transmission of the relevant data among a plurality of transmission types is matched to a transmission gesture type among a plurality of transmission gesture types,
the method further comprising:
in response to switching of a message input mode, dividing into an input unit and a display unit;
displaying character data inputted from the input unit on the display unit;
in response to generation of transmission gesture on the display unit while the character data is displayed on the display unit, transmitting a message including the character data displayed on the display unit; and
in response to generation of transmission gesture on the input unit while the character data is displayed on the display unit, switching to file attachment mode.

10. The method as claimed in claim 9, wherein transmitting of the relevant data comprises:
storing and simultaneously transmitting the relevant data, when the transmission gesture with the stylus is generated.

11. The method as claimed in claim 9, wherein transmitting of the relevant data comprises:displaying transmission types each capable of transmitting the relevant data, when the transmission gesture with the stylus is generated; and
switching to a transmission mode matched to selected relevant transmission type and transmitting the relevant data, when the relevant transmission type is selected from among the displayed transmission types.

12. The method as claimed in claim 9, wherein transmitting of the relevant data comprises:
determining whether a preset transmission mode exists, when the transmission gesture with the stylus is generated; and
switching to the preset transmission mode and transmitting the relevant data, when the preset transmission mode exists.

13. The method as claimed in claim 9, wherein transmitting of the relevant data comprises:
transmitting the relevant data, for which the transmission gesture is generated among multiple data, when the transmission gesture with the stylus is generated while the multiple data are displayed.

14. The method as claimed in claim 9, wherein transmitting of the relevant data comprises:
storing and simultaneously transmitting data entered in an input mode, when the transmission gesture with the stylus is generated on the touch screen unit in the input mode of the terminal;
transmitting music data which is being reproduced, when the transmission gesture with the stylus is generated on the touch screen unit in a music reproduction mode of the terminal, and transmitting relevant music data, for which the transmission gesture is generated on a music reproduction list, when the transmission gesture with the stylus is generated on the touch screen unit while the music reproduction list is displayed in the music reproduction mode; and
displaying multiple data in a data display mode of the terminal, and transmitting the relevant data, for which the transmission gesture is generated among the multiple data, when the transmission gesture with the stylus is generated on the touch screen unit while the multiple data are displayed.

15. The method as claimed in claim 9, wherein transmitting of the relevant data comprises:
capturing image data, storing the captured image data in a form of still image data and simultaneously transmitting the captured image data, when the transmission gesture with the stylus is generated in a preview mode of the terminal; and
storing captured image data in a form of moving image data and simultaneously transmitting the moving image data, when the transmission gesture with the stylus is generated in a moving image capturing mode of the terminal.

## Patentansprüche

1. Vorrichtung zum Steuern von Datenübertragung in einem Endgerät, wobei die Vorrichtung Folgendes umfasst:
eine Touchscreen-Einheit zum Erzeugen einer Übertragungsgeste mit einem Stift; und
eine Steuerung, die konfiguriert ist zum:
Ausführen eines Steuervorgangs zum Übertragen relevanter Daten, wenn die Übertragungsgeste mit dem Stift auf der Touchscreen-Einheit erzeugt wird,
wobei ein Übertragungstyp zum Übertragen der relevanten Daten unter einer Vielzahl von Übertragungstypen an einen Übertragungsgestentyp unter einer Vielzahl von Übertragungsgestentypen angepasst ist,
wobei die Steuerung des Weiteren konfiguriert ist zum:
als Antwort auf das Umschalten eines Nachrichteneingabemodus, Aufteilen der Touchscreen-Einheit in eine Eingabeeinheit und eine Anzeigeeinheit,
Anzeigen von Zeichendaten, die von der Eingabeeinheit auf der Anzeigeeinheit eingegeben werden,
als Antwort auf das Erzeugen einer Übertragungsgeste auf der Anzeigeeinheit während die Zeichendaten auf der Anzeigeeinheit angezeigt werden, Übertragen einer Nachricht, die die Zeichendaten enthält, die auf der Anzeigeeinheit angezeigt werden, und
als Antwort auf das Erzeugen einer Übertragungsgeste auf der Eingabeeinheit während die Zeichendaten auf der Anzeigeeinheit angezeigt werden, Umschalten in den Dateianhangmodus.

2. Vorrichtung nach Anspruch 1, wobei die Steuerung konfiguriert ist, um einen Steuervorgang auszuführen, um die relevanten Daten zu speichern und gleichzeitig zu übertragen, wenn die Übertragungsgeste mit dem Stift auf der Touchscreen-Einheit erzeugt wird.

3. Vorrichtung nach Anspruch 1, wobei, wenn die Übertragungsgeste mit dem Stift auf der Touchscreen-Einheit erzeugt wird, die Steuerung konfiguriert ist, um einen Steuervorgang auszuführen, um Übertragungstypen anzuzeigen, die jeweils fähig sind, die relevanten Daten zu übertragen, und die relevanten Daten in einem Übertragungsmodus zu übertragen, der an einen ausgewählten Übertragungstyp angepasst ist.

4. Vorrichtung nach Anspruch 1, wobei, wenn die Übertragungsgeste mit dem Stift auf der Touchscreen-Einheit erzeugt wird, die Steuerung konfiguriert ist, um einen Steuervorgang auszuführen, um die relevanten Daten in einem relevanten Übertragungsmodus zu übertragen, der an einen Typ der erzeugten Übertragungsgeste angepasst ist.

5. Vorrichtung nach Anspruch 1, wobei, wenn die Übertragungsgeste mit dem Stift auf der Touchscreen-Einheit erzeugt wird, die Steuerung konfiguriert ist, um einen Steuervorgang auszuführen, um die relevanten Daten in einem voreingestellten Übertragungsmodus zu übertragen.

6. Vorrichtung nach Anspruch 1, wobei, wenn die Übertragungsgeste mit dem Stift auf der Touchscreen-Einheit erzeugt wird, die Steuerung konfiguriert ist, um einen Steuervorgang auszuführen, um die relevanten Daten zu übertragen, für welche die Übertragungsgeste unter mehreren Daten erzeugt wird.

7. Vorrichtung nach Anspruch 1,
wobei, wenn die Übertragungsgeste mit dem Stift in einem Eingabemodus des Endgeräts erzeugt wird, die Steuerung konfiguriert ist, um einen Steuervorgang auszuführen, um Daten, die in einem Eingabemodus eingegeben werden, zu speichern und gleichzeitig zu übertragen,
wobei, wenn die Übertragungsgeste mit dem Stift in einem Musikwiedergabemodus des Endgeräts erzeugt wird, die Steuerung konfiguriert ist, um einen Steuervorgang auszuführen, um Musikdaten zu übertragen, die reproduziert werden, und
wobei, wenn die Übertragungsgeste mit dem Stift in einem Datenanzeigemodus des Endgeräts erzeugt wird, die Steuerung konfiguriert ist, um einen Steuervorgang auszuführen, um die relevanten Daten zu übertragen, für welche die Übertragungsgeste unter mehreren Daten erzeugt wird.

8. Vorrichtung nach Anspruch 1, wobei die Steuerung konfiguriert ist, um einen Steuervorgang zum Erfassen von Bilddaten auszuführen, die erfassten Bilddaten in Form von Standbilddaten zu speichern und gleichzeitig die erfassten Bilddaten zu übertragen, wenn die Übertragungsgeste mit dem Stift in einem Vorschaumodus des Endgeräts erzeugt wird, und einen Steuervorgang auszuführen, um erfasste Bilddaten in Form von Bewegtbilddaten zu speichern und gleichzeitig die Bewegtbilddaten zu übertragen, wenn die Übertragungsgeste mit dem Stift in einem Bewegtbildaufnahmemodus des Endgeräts erzeugt wird.

9. Verfahren zum Steuern der Datenübertragung in einem Endgerät, wobei das Verfahren Folgendes umfasst:
Bestimmen, ob eine Übertragungsgeste mit einem Stift auf einer Touchscreen-Einheit des Endgeräts erzeugt wird; und
Übertragen relevanter Daten, wenn eine Übertragungsgeste mit dem Stift erzeugt wird, wobei ein Übertragungstyp zum Übertragen der relevanten Daten unter einer Vielzahl von Übertragungstypen an einen Übertragungsgestentyp unter einer Vielzahl von Übertragungsgestentypen angepasst ist,
wobei das Verfahren des Weiteren Folgendes umfasst:
als Antwort auf das Umschalten eines Nachrichteneingabemodus, Aufteilen in eine Eingabeeinheit und eine Anzeigeeinheit;
Anzeigen von Zeichendaten, die von der Eingabeeinheit auf der Anzeigeeinheit eingegeben werden;
als Antwort auf das Erzeugen einer Übertragungsgeste auf der Anzeigeeinheit während die Zeichendaten auf der Anzeigeeinheit angezeigt werden, Übertragen einer Nachricht, die die Zeichendaten enthält, die auf der Anzeigeeinheit angezeigt werden; und
als Antwort auf das Erzeugen einer Übertragungsgeste auf der Eingabeeinheit während die Zeichendaten auf der Anzeigeeinheit angezeigt werden, Umschalten in den Dateianhangmodus.

10. Verfahren nach Anspruch 9, wobei das Übertragen der relevanten Daten Folgendes umfasst:
Speichern und gleichzeitiges Übertragen der relevanten Daten, wenn die Übertragungsgeste mit dem Stift erzeugt wird.

11. Verfahren nach Anspruch 9, wobei das Übertragen der relevanten Daten Folgendes umfasst: Anzeigen von Übertragungstypen, die jeweils fähig sind, die relevanten Daten zu übertragen, wenn die Übertragungsgeste mit dem Stift erzeugt wird; und
Umschalten in einen Übertragungsmodus, der an den ausgewählten relevanten Übertragungstyp angepasst ist, und Übertragen der relevanten Daten, wenn der relevante Übertragungstyp aus den angezeigten Übertragungstypen ausgewählt wird.

12. Verfahren nach Anspruch 9, wobei das Übertragen der relevanten Daten Folgendes umfasst:
Bestimmen, ob ein voreingestellter Übertragungsmodus existiert, wenn die Übertragungsgeste mit dem Stift erzeugt wird; und
Umschalten in den voreingestellten Übertragungsmodus und Übertragen der relevanten Daten, wenn der voreingestellte Übertragungsmodus existiert.

13. Verfahren nach Anspruch 9, wobei das Übertragen der relevanten Daten Folgendes umfasst:
Übertragen der relevanten Daten, für welche die Übertragungsgeste unter mehreren Daten erzeugt wird, wenn die Übertragungsgeste mit dem Stift erzeugt wird, während die mehreren Daten angezeigt werden.

14. Verfahren nach Anspruch 9, wobei das Übertragen der relevanten Daten Folgendes umfasst:
Speichern und gleichzeitiges Übertragen von Daten, die in einem Eingabemodus eingegeben werden, wenn die Übertragungsgeste mit dem Stift auf der Touchscreen-Einheit in dem Eingabemodus des Endgeräts erzeugt wird;
Übertragen von Musikdaten, welche reproduziert werden, wenn die Übertragungsgeste mit dem Stift auf der Touchscreen-Einheit in einem Musikwiedergabemodus des Endgeräts erzeugt wird, und Übertragen relevanter Musikdaten, für welche die Übertragungsgeste auf einer Musikwiedergabeliste erzeugt wird, wenn die Übertragungsgeste mit dem Stift auf der Touchscreen-Einheit erzeugt wird, während die Musikwiedergabeliste in dem Musikwiedergabemodus angezeigt wird; und
Anzeigen mehrerer Daten in einem Datenanzeigemodus des Endgeräts und Übertragen der relevanten Daten, für welche die Übertragungsgeste unter den mehreren Daten erzeugt wird, wenn die Übertragungsgeste mit dem Stift auf der Touchscreen-Einheit erzeugt wird, während die mehreren Daten angezeigt werden.

15. Verfahren nach Anspruch 9, wobei das Übertragen der relevanten Daten Folgendes umfasst:
Erfassen von Bilddaten, Speichern der erfassten Bilddaten in Form von Standbilddaten und gleichzeitiges Übertragen der erfassten Bilddaten, wenn die Übertragungsgeste mit dem Stift in einem Vorschaumodus des Endgeräts erzeugt wird; und
Speichern der erfassten Bilddaten in Form von Bewegtbilddaten und gleichzeitiges Übertragen der Bewegtbilddaten, wenn die Übertragungsgeste mit dem Stift in einem Bewegtbilderfassungsmodus des Endgeräts erzeugt wird.

## Revendications

1. Appareil pour commander la transmission de données dans un terminal, l'appareil comprenant :
une unité d'écran tactile pour générer un geste de transmission avec un stylet ; et
un contrôleur configuré pour :
effectuer une opération de commande pour transmettre des données pertinentes lorsque le geste de transmission avec le stylet est généré sur l'unité d'écran tactile,
où, un type de transmission pour la transmission des données pertinentes parmi une pluralité de types de transmission est adapté à un type de geste de transmission parmi une pluralité de types de geste de transmission,
où le contrôleur est en outre configuré pour :
en réponse à la commutation d'un mode d'entrée de message, diviser l'unité d'écran tactile en une unité d'entrée et une unité d'affichage,
afficher des données de caractères entrées depuis l'unité d'entrée sur l'unité d'affichage,
en réponse à la génération d'un geste de transmission sur l'unité d'affichage alors que les données de caractère sont affichées sur l'unité d'affichage, transmettre un message comprenant les données de caractère affichées sur l'unité d'affichage, et
en réponse à la génération d'un geste de transmission sur l'unité d'entrée alors que les données de caractère sont affichées sur l'unité d'affichage, passer en mode de pièce jointe.

2. Appareil selon la revendication 1, où le contrôleur est configuré pour effectuer une opération de commande pour stocker et simultanément transmettre les données pertinentes, lorsque le geste de transmission avec le stylet est généré sur l'unité d'écran tactile.

3. Appareil selon la revendication 1, où, lorsque le geste de transmission avec le stylet est généré sur l'unité à écran tactile, le contrôleur est configuré pour effectuer une opération de commande pour afficher des types de transmission, chacun étant capable de transmettre les données pertinentes, et pour transmettre les données pertinentes dans un mode de transmission adapté à un type de transmission sélectionné.

4. Appareil selon la revendication 1, où, lorsque le geste de transmission avec le stylet est généré sur l'unité à écran tactile, le contrôleur est configuré pour effectuer une opération de commande pour transmettre les données pertinentes dans un mode de transmission pertinent adapté à un type de geste de transmission généré.

5. Appareil selon la revendication 1, où, lorsque le geste de transmission avec le stylet est généré sur l'unité à écran tactile, le contrôleur est configuré pour effectuer une opération de commande pour transmettre les données pertinentes dans un mode de transmission prédéfini.

6. Appareil selon la revendication 1, où, lorsque le geste de transmission avec le stylet est généré sur l'unité à écran tactile, le contrôleur est configuré pour effectuer une opération de commande pour transmettre les données pertinentes, pour lesquelles le geste de transmission est généré parmi des données multiples.

7. Appareil selon la revendication 1,
où, lorsque le geste de transmission avec le stylet est généré dans un mode d'entrée du terminal, le contrôleur est configuré pour effectuer une opération de commande pour stocker et transmettre simultanément des données entrées dans un mode d'entrée,
où, lorsque le geste de transmission avec le stylet est généré dans un mode de reproduction musicale du terminal, le contrôleur est configuré pour effectuer une opération de commande pour transmettre des données musicales qui sont reproduites, et
où, lorsque le geste de transmission avec le stylet est généré dans un mode d'affichage de données du terminal, le contrôleur est configuré pour effectuer une opération de commande pour transmettre les données pertinentes, pour lesquelles le geste de transmission est généré parmi des données multiples.

8. Appareil selon la revendication 1, où le contrôleur est configuré pour effectuer une opération de commande pour capturer des données d'images, stocker les données d'images capturées sous la forme de données d'images fixes, et simultanément transmettre les données d'images capturées lorsque le geste de transmission avec le stylet est généré dans un mode de prévisualisation du terminal, et effectuer une opération de commande pour stocker des données d'images capturées sous la forme de données d'images animées, et simultanément transmettre les données d'images animées lorsque le geste de transmission avec le stylet est généré dans un mode de capture d'images animées du terminal.

9. Procédé pour commander la transmission de données dans un terminal, le procédé comprenant :
déterminer si un geste de transmission avec un stylet est généré sur une unité d'écran tactile du terminal ; et
transmettre des données pertinentes lorsqu'un geste de transmission avec le stylet est généré,
où un type de transmission pour la transmission des données pertinentes parmi une pluralité de types de transmission est adapté à un type de geste de transmission parmi une pluralité de types de gestes de transmission,
le procédé comprenant en outre :
en réponse à la commutation d'un mode d'entrée de message, diviser en une unité d'entrée et une unité d'affichage ;
afficher des données de caractères entrées depuis l'unité d'entrée sur l'unité d'affichage ;
en réponse à la génération d'un geste de transmission sur l'unité d'affichage alors que les données de caractère sont affichées sur l'unité d'affichage, transmettre un message comprenant les données de caractère affichées sur l'unité d'affichage ; et
en réponse à la génération d'un geste de transmission sur l'unité d'entrée alors que les données de caractère sont affichées sur l'unité d'affichage, passer en mode de pièce jointe.

10. Procédé selon la revendication 9, où la transmission des données pertinentes comprend : le stockage et la transmission simultanée des données pertinentes, lorsque le geste de transmission avec le stylet est généré.

11. Procédé selon la revendication 9, où la transmission des données pertinentes comprend :
afficher des types de transmission, chacun étant capable de transmettre les données pertinentes, lorsque le geste de transmission avec le stylet est généré ; et
passer à un mode de transmission adapté au type de transmission pertinent sélectionné et transmettre des données pertinentes, lorsque le type de transmission pertinent est sélectionné parmi les types de transmission affichés.

12. Procédé selon la revendication 9, où la transmission des données pertinentes comprend :
déterminer si un mode de transmission prédéfini existe, lorsque le geste de transmission avec le stylet est généré ; et
passer au mode de transmission prédéfini et transmettre des données pertinentes, lorsque le mode de transmission prédéfini existe.

13. Procédé selon la revendication 9, où la transmission des données pertinentes comprend :
la transmission des données pertinentes, pour lesquelles le geste de transmission est généré parmi des données multiples, lorsque le geste de transmission avec le stylet est généré alors que les données multiples sont affichées.

14. Procédé selon la revendication 9, où la transmission des données pertinentes comprend :
stocker et transmettre simultanément des données entrées dans un mode d'entrée, lorsque le geste de transmission avec le stylet est généré sur l'unité d'écran tactile dans le mode d'entrée du terminal ;
transmettre des données musicales qui sont reproduites, lorsque le geste de transmission avec le stylet est généré sur l'unité à écran tactile dans un mode de reproduction musicale du terminal, et transmettre des données musicales pertinentes, pour lesquelles le geste de transmission est généré sur une liste de reproduction musicale, lorsque le geste de transmission avec le stylet est généré sur l'unité à écran tactile alors que la liste de reproduction musicale est affichée dans le mode de reproduction musicale ; et
afficher des données multiples dans un mode d'affichage de données du terminal, et transmettre les données pertinentes, pour lesquelles le geste de transmission est généré parmi les données multiples, lorsque le geste de transmission avec le stylet est généré sur l'unité à écran tactile alors que les données multiples sont affichées .

15. Procédé selon la revendication 9, où la transmission des données pertinentes comprend :
capturer des données d'images, stocker les données d'images capturées sous la forme de données d'images fixes et transmettre simultanément les données d'images capturées, lorsque le geste de transmission avec le stylet est généré dans un mode de prévisualisation du terminal ; et
stocker des données d'images capturées sous la forme de données d'images animées et transmettre simultanément les données d'images animées, lorsque le geste de transmission avec le stylet est généré dans un mode de capture d'images animées du terminal.
